(19)

**Europäisches Patentamt**

**European Patent Office**

**Office européen des brevets**

(11) **EP 4 671 704 A1**

(12) **EUROPEAN PATENT APPLICATION**

(43) Date of publication:
**31.12.2025 Bulletin 2026/01**

(21) Application number: **24290023.1**

(22) Date of filing: **28.06.2024**

(51) International Patent Classification (IPC):
**G01F 23/296** (2022.01)   **B64D 37/30** (2006.01)

(52) Cooperative Patent Classification (CPC):
**G01F 23/2966; B64D 37/02; B64D 37/04; B64D 37/30**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **AIRBUS Operations GmbH**
  **21129 Hamburg (DE)**
• **Airbus (S.A.S.)**
  **31700 Blagnac (FR)**

(72) Inventors:
• **SCHRAMM, Gerrit**
  **21129 Hamburg (DE)**
• **MEYERHOFF, Thomas**
  **21129 Hamburg (DE)**
• **GEISLER, Helge**
  **21129 Hamburg (DE)**
• **ZOGHAIB, Lionel**
  **31700 Blagnac (DE)**

(74) Representative: **LKGLOBAL**
**Partnerschaftsgesellschaft mbB**
**Brienner Straße 11**
**80333 München (DE)**

(54) **FILLING LEVEL MONITORING DEVICE FOR MONITORING THE FILLING LEVEL OF A FLUID CONTAINER, HYDROGEN TANK, AND AIRCRAFT COMPRISING SUCH HYDROGEN TANK**

(57)     A filling level monitoring device (100) for monitoring the filling level (210) of a fluid container (200) is disclosed. The filling level monitoring device comprises at least one exciting element (10), a first sensing element (21) and a second sensing element (22), a signal source (30), and a processing unit (40). The at least one exciting element is configured to be mounted to the fluid container. The first sensing element and the second sensing element are configured to be mounted to the fluid container at opposite sides (221, 222) of the fluid container. The signal source is connected to the at least one exciting element and is configured to generate an input signal (31) comprising a multitude of frequency components. The first sensing element and the second sensing element are each connected to the processing unit and are configured to sense vibrations within the fluid container and to generate and send corresponding vibration signals (23, 24) to the processing unit. The processing unit is configured to determine a horizontal vibration mode (25) from the vibration signals of the first sensing element and the second sensing element and the input signal, to determine a modal frequency (80) of the determined horizontal vibration mode, and to determine a current filling level of the fluid container based on the modal frequency of the determined horizontal vibration mode.

Fig. 1

**Description**

TECHNICAL FIELD

The present disclosure relates to filling level monitoring devices for fluid tanks and, in particular, to hydrogen tanks for aircraft applications having such a monitoring device.

TECHNICAL BACKGROUND

In light of increasing environmental protection efforts, alternative propulsion sources for aircrafts are developed. Such alternative propulsion sources may use alternative fuels other than kerosene fuel, such as liquid hydrogen, which cannot be stored in regular fuel tanks. Hydrogen fuel or other liquid gas fuels therefore need to be stored in suitable tanks, which must, e.g., withstand the necessary internal pressure and low temperature (20K) to store the gas in a liquid state. However, for safety reasons, it is also necessary to monitor the filling level of the fuel tanks accurately at any time. Currently, filling levels of fluid tanks can, for example, be determined by measuring the weight of the tank or indirectly by monitoring the flow out of the tank. However, these methods are either not very accurate or may not be suitable to be used in aircraft applications. For example, soft suspensions (such as those found in weighing scales) cannot be easily introduced in moving vehicles. An aircraft may, for example, experience changes in altitude and during such ascend or descent flight segments of the aircraft, the gravity vector may not be constant with regard to the fuel tank, leading to difficulties in determining an accurate weight value and therefore filling level. The same applies for curved flight segments in which the aircraft changes its flight vector.

Further, sensing solutions such as those used for Kerosene sensing implemented today in wings of aircraft cannot be used for hydrogen tanks for safety reasons (electronic instruments and hydrogen should be separated) and insulation (leakage) reasons.

Overall, there is a need to develop a non-intrusive sensing system for cryogenic tanks, in particular in aircraft applications. Today, a very limited set of technical options is available for this purpose. The interpretation of vibration-based measurements is one of these solutions.

Methods for determining the filling level of fluid tanks by monitoring resonance frequencies of the fluid tanks are in principle known in the art. A general approach regarding such monitoring has been described in the patent application WO 2023 / 217 807 A1 (briefly described below) of the applicant, which illustrates a concept and gauging principles. However, such methods in some cases may have problems to determine and track/monitor stable vibrational modes.

WO 2023 / 217 807 A1 describes a filling level monitoring device for liquid tanks, such as hydrogen tanks, a hydrogen tank comprising such a filling level monitoring device and an aircraft comprising such a hydrogen tank. The filling level monitoring device uses a signal source and exciting elements to couple vibrational loads having a multitude of frequency components into a container. Resonance frequencies of the container are depending on the filling level of the container. Sensing elements measure vibrations in the container after the exciting elements coupled the vibrational loads into the container. A processing unit performs spectral analyses of the input signal from the signal source and of vibration signals from the sensing elements and compares the spectral functions of the input signal and the vibration signal(s) to extract resonance frequencies. The resonance frequencies of the container are further depending on the spatial orientation of the container. A filling level indicator unit calculates a current filling level of the container from the extracted resonance frequencies and a spatial orientation signal from a spatial orientation sensor by correlating the collected data with reference data.

DESCRIPTION

It is an objective to provide accurate and stable monitoring of fuel levels of fluid tanks in aircraft applications.

This objective is solved by the subject matter of the independent claims. Further embodiments are described in the dependent claims as well as in the following description.

According to a first aspect, a filling level monitoring device for monitoring the filling level of a fluid container is disclosed. The filling level monitoring device comprises at least one exciting element, a first sensing element and a second sensing element, a signal source, and a processing unit. The at least one exciting element is configured to be mounted to the fluid container. The first sensing element and the second sensing element are configured to be mounted to the fluid container at opposite sides of the fluid container. The signal source is connected to the at least one exciting element and is configured to generate an input signal comprising a multitude of frequency components. The first sensing element and the second sensing element are each connected to the processing unit and are configured to sense vibrations within the fluid container and to generate and send corresponding vibration signals to the processing unit. The processing unit is configured to determine a horizontal vibration mode from the vibration signals of the first sensing element and the second sensing element and the input signal, to determine a modal frequency of the determined horizontal vibration mode, and to determine a current filling level of the fluid container based on the modal frequency of the determined horizontal vibration mode.

Such a filling level monitoring device may be used for any fluid container for liquid, such as for gas bottles or containers for hydrogen. However, the filling level monitoring device is not limited to hydrogen containers. It may, for example, also be used with containers for liquified petroleum gas (LPG), methane gas, or any other fluid that is stored under pressure in a liquified form. Further, the filling level monitoring device may also be used for regular liquid tanks. In general, as used herein, the term fluid covers liquids (such as pressurized gasses in liquid form), mixtures of liquids and gases, i.e., fillings of the container where a filling of the container is present in both phase states (liquid and gas) simultaneously, as well as pure gases. Preferably, the fluid container is a dewar tank.

In general, as any other tangible structure, under force-based excitation, a fluid container for storing a fluid exhibits a characteristic vibration or oscillation pattern, where the amplitudes of the oscillations or vibrations in specific frequency ranges show a relative maximum. While some of these so-called resonance frequencies depend only on the structure of the container itself and are independent of the filling of the container, others can be clearly assigned to the stored contents. In particular, a liquified gas filling such as liquid hydrogen changes specific resonance frequencies of the container, where the change in frequency is proportional or at least clearly associated to the filling level, i.e., to the change of the mass and/or volume of the filling, of the fluid container. These resonances shift in frequency when the filling level changes and can therefore be used to infer the filling level of the fluid container.

Hence, by monitoring resonance frequencies of the container, the filling level of the container may in principle be determined. In general, measuring the resonance frequencies based on multiple sensors placed on different locations at the fluid container improves accuracy of the measurement of the filling level if suitable vibrational modes are chosen that are depending on the filling level. However, some of these vibrational modes are also depending on the specific excitation of the fluid container as well as on the orientation of the fluid container and on the location of the measurement of the vibrations within the container. Such modes may also be influenced by other external factors such as the type of mount that is used to fix the fluid container to a surrounding structure. In general, mounts of a fluid container can significantly alter the dynamic behavior of the fluid container, which can, for example, introduce non-linear vibrational characteristics which introduces noise and unexpected modal shifts, and other effects adverse to the goal of determining the filling level of the fluid container. Also, some of the vibrational modes, in particular their phase relationship to each other when measured at different locations at the fluid container, may deviate. If, for example, multiple sensing elements or sensors are used to measure vibrations within the fluid container that are placed at different locations on the fluid container, these deviations would make it difficult to infer the filling level based on combined measurements of pairs of the sensing elements alone. However, using suitable pairs of measurements highly improve the signal to noise ratio of the measurement.

In order to measure the filling level of the fluid container accurately and in a stable way that is not or at least not by a relevant magnitude influence by the surroundings and movements of the fluid container, it is therefore advantageous to, on the one hand, use combinations of pairs of measurements at different locations on the fluid container and, on the other hand, to examine vibrational modes that are stable and independent on outer factors such as movements of the fluid container.

It has been found that one mode is particularly suitable for accurately measuring the filling level of the fluid container without regard to the orientation of the fluid container and other factors such as the type of mount, namely the so called "horizontal vibration mode". The horizontal vibration mode refers to a vibration mode in which vibrations or oscillations propagate "horizontally" within the fluid container. Horizontally in particular means in a horizontal direction, if the fluid container is mounted at a circumferential boundary on its sides in a lying configuration. In other words, if, in a non-limiting example, the fluid container is a cylindrical dewar tank, the horizontal direction of the fluid container would correspond to the length direction of this fluid container (i.e., the direction extending between the tips of the dewar tank). However, it has to be born in mind that the fluid container, if it is mounted, for example, within an aircraft or other vehicle, of course not always stays in this configuration with regard to the gravity vector (because of the motion of the vehicle). The term "horizontally" therefore refers to the rest configuration (for example in an aircraft on the tarmac, where the length direction of the fluid container would be horizontal with regard to the ground (i.e., parallel to the ground or perpendicular to the gravity vector) if the fluid container is mounted with its length direction parallel to the length direction of the fuselage). With regard to the present disclosure, the horizontal vibration mode may refer to any vibration mode that propagates in sync (as described below) between two opposite sides of the fluid container, independent on the discrete configuration of the fluid container and its mounting direction. "Propagates in sync" means, the locations of the fluid container, at which the sensing elements are mounted move/vibrate together in sync.

The horizontal vibration mode has shown to be substantially independent on outer factors, stable over time, and (at least substantially) linearly dependent on the filling level of the fluid container, making it highly suitable for measuring the filling level of a fluid container, in particular in highly dynamic environments such as in aircraft. The horizontal vibration mode corresponds to a vibration mode that propagates in sync between two opposite sides of the fluid container. In other words, these two opposite sides or locations of the fluid container always vibrate in the same way relative to each other and the vibrations are at least substantially independent on the specific type of mount and the movements of the fluid container, such as those occurring during flight of an aircraft. In particular, the opposite sides correspond to sides (or locations) at the fluid container, whose line of connection extend in one of the main axis of the fluid container. In particular, as preferred, if a dewar tank is used as the fluid container, the opposite sides may, for example and without limitation, correspond to the tips of the dewar tank. However, other opposite sides and other fluid containers may also be conceivable. The tips of the fluid container are always moving (vibrating) synchronously despite a wide variety of possible perturbations, such as various filling levels and various mounting types, as long as the mounts remain at the bottom (meaning its circumferential boundary) of the outer tank.

The inventors found that the horizontal vibration mode also is highly sensitive to the filling level within the fluid container, such that its modal frequency drifts in a predictable way with changing filling levels. Further, it can be easily measured from the outside of the fluid container by attaching corresponding vibration sensors (i.e., the first and the second sensing elements). Since the opposite sides of the fluid container also vibrate synchronously when excited accordingly, the two measurements of the first sensing element and the second sensing element can be used together to determine the horizontal vibration mode. This, and the predictability of the modal frequency drifts, on the one hand greatly increases the signal to noise ratio of the measurement of the filling level, and, on the other hand, is highly predictable.

The fluid container may, for example, be the component of a tank that is actually holding the (fluid) content of the tank, such as a pressure tight gas bottle or other suitable structures. Preferably, although not so limited, the fluid container is a dewar tank. In particular, the container may have an axial symmetric form, though other forms are conceivable, too.

The signal source, or rather an output terminal of the signal source, is connected to the at least one exciting element and generates electrical signals, i.e., the input signals for the exciting elements, having a predefined signal pattern. In particular, the signal source generates electrical signals that cover a multitude of different frequencies in the range of the respective resonance (i.e., modal) frequencies that respond with a frequency change at any possible filling level of the container. Hence, the electrical signals in particular cover all the modal frequencies the horizontal vibration mode may exhibit at any conceivable filling level of the fluid container. As described above, the horizontal vibration mode is highly visible from the outside and its modal frequency is highly correlated with the filling level of the fluid container. Therefore, for each filling level of the fluid container, the horizontal vibration mode has a specific modal frequency. The signal source may, for example, output a signal having an evenly distributed spectral distribution, such as a white noise signal. However, other signal shapes covering the respective frequencies are possible, too. For example, such a white noise signal may be limited to the modal frequency range of the horizontal vibration mode that can occur for all the possible filling levels, e.g., by using a corresponding window function on the signal.

The at least one exciting element may be any element or device suitable for mechanically exciting the container, i.e., to bring the container to vibrate or oscillate. In particular, the exciting element may be directly attached to the container and may be configured to vibrate in response to an electrical signal applied to the exciting element. The exciting element can, for example, be a shaker or any other device that introduces vibrating movements into the fluid container. However, the exciting element does not necessarily need to be attached directly to the container and may, for example, also be a loudspeaker or similar device that emits acoustic waves. In such configurations, the emitting direction of the speaker may be directed towards the container at the desired location of the container, so that the emitted acoustic waves coupled into the container mechanically excite the container. Also, as described further below, instead of additional exciting elements, in aircraft or vehicles, aircraft (or vehicle) noise originating from turbines, pumps, etc. may also be directly coupled into the container and therefore act as exciting element. Preferably, the at least one exciting element is co-located with one of the sensing elements, such that specifically the horizontal vibration mode is excited within the fluid container. Since the at least one exciting element is connected to the output terminal of the signal source, the electrical signal output by the signal source (the input signal for the exciting elements) is converted into respective mechanical vibrations or oscillations which are coupled into the container by the at least one exciting element. As will be readily apparent to one of ordinary skill in the art, frequency components of the input signal which correspond to resonance frequencies of the container (i.e., in particular to the current modal frequency of the horizontal vibration mode), or rather of the system of the container and the filling, at a given time show a relative amplitude maximum of the oscillations or vibrations of the container while other frequency components do not.

The first sensing element and the second sensing element may be any sensing or sensor element which is suitable to detect vibrations or oscillation of the container (or in general to detect the structural dynamics of the container or changes in the container wall's physical properties which can be used to be correlated to changes of the container's dynamics) and to generate respective electrical signals, in particular signals comprising frequency components of the oscillation or vibration pattern of the container. These signals are input into a processing unit.

The processing unit may be any computerized device capable of analyzing electrical signals, in particular by performing a spectral or modal analysis. The processing unit may, for example, be a general-purpose computer having a CPU and memory components, which is well known in the art. The processing unit may also be any other microcomputer device, such as an ASIC or FPGA or TPU device. The processing unit receives the output signals, i.e., the vibration signals, from the first sensing element and the second sensing element and performs joint data analysis algorithms on these vibration signals together with the input signal of the signal source for computing/determining the horizontal vibration mode from the vibration signals received from the first sensing element and the second sensing element and for determining a current filling level of the fluid container based on the current modal frequency of the determined horizontal vibration mode (for example by correlating the determined modal frequency with reference horizontal mode frequencies, as described further below).

For example, as described further below in more detail with regard to certain embodiments, the processing unit may determine a first transfer function (e.g., a Frequency Response Function (FRF)) between the vibration signal of the first sensing element and the input signal. The processing unit may also determine a corresponding second transfer function (e.g., a Frequency Response Function (FRF)) between the vibration signal of the second sensing element and the input signal and may combine the first and the second transfer functions into an indicator function that filters/damps components of the two transfer functions that are not in sync, e.g., that are not parallel in motion (e.g., by complex multiplication, as also described further below with regard to certain embodiments) and that amplifies components of the transfer functions that correlate with the horizontal vibration mode in order to extract/determine the horizontal vibration mode and its current modal frequency from the measured data. The current filling level may then be determined based on the current modal frequency of the determined horizontal vibration mode. However, these are only examples for a corresponding data analysis algorithm for determining the horizontal vibration mode (and its modal frequency). Other suitable algorithms may also be conceivable. As long as the horizontal vibration mode and its current modal frequency can be determined, the filling level of the fluid container can then easily be determined by correlating the current modal frequency with reference data (since the modal frequency of the horizontal vibration mode is highly visible (even under dynamic conditions) and is highly correlated with the filling level of the fluid container.

Although pressure and/or temperature do at least not have a very significant effect on the horizontal vibration mode, they may, in principle, at least have a limited effect. Therefore, to increase accuracy even further, optionally, the temperature of the fluid container may be taken into account when determining the filling level, since with changing temperature, the pressure inside the container changes. This may also lead to changes in the resonance or modal frequencies of the fluid container. The temperature of the container may be accounted for by being included into corresponding reference horizontal mode frequency data or machine learning algorithms, as described below. Alternatively or additionally to taking into account the temperature, the pressure inside the tank may be directly used. The filling level monitoring system therefore may further include corresponding temperature and/or pressure sensors.

According to an embodiment, the processing unit is configured to determine an indicator function by determining a first transfer function in the frequency domain for the vibration signal of the first sensing element with regard to the input signal, by determining a second transfer function in the frequency domain for the vibration signal of the second sensing element with regard to the input signal, and by combining the first transfer function with the second transfer function to determine the indicator function. The processing unit is further configured to determine the horizontal vibration mode from the indicator function.

The processing unit receives and analyzes the input signal from the signal source at any instance in time, to compute the frequency components included in the input signal. However, instead of directly using the input signal, a sensor signal from corresponding feedback sensors at the at least one exciting element may also be used. The processing unit further receives and analyzes the vibration signals of the first sensing element and the second sensing element. In general, the input signal and the vibration signals are time series data.

The frequency components (i.e., the frequency domain representation) of the input signal and the vibration signals may therefore, for example, be determined by performing any spectral analysis algorithm (such as, for example, Fast Fourier Transforms (FFTs)) on the corresponding data, thereby creating corresponding spectral functions indicating the signal components over the frequency (i.e., the corresponding signals (input signal and vibration signals) in the frequency domain).

These spectral functions of the vibration signals and the input signal may then be used to determine the corresponding first and second transfer functions (also referred to as Frequency Response Functions (FRF)). Such a frequency response function is defined as

$$H_i(f) = \frac{V_i(f)}{E(f)}$$

where $H_i(f)$ is the corresponding transfer function. These transfer functions indicate the amplification or attenuation of the amplitude of certain frequency components over frequency $f$. $V_i(f)$ is the corresponding measurement signal in the frequency domain (i.e., the vibration signal of the first sensing element or the second sensing element in the frequency domain, for example a corresponding FFT of the corresponding signal) and $E(f)$ is the input signal (or excitation signal) in the frequency domain (e.g., an FFT of the input signal). The index i refers to the corresponding sensing element, i.e., $H_1(f)$ is the first transfer function and $V_1(f)$ is the vibration signal of the first sensing element in the frequency domain; $H_2(f)$ is the second transfer function and $V_2(f)$ is the vibration signal of the second sensing element in the frequency domain. Hence,

the functions $V_i(f)$ and $E(f)$ correspond to spectral functions of the vibration signals and the input signal, such as those obtained by an FFT or other spectral analysis of the corresponding signals, and the transfer functions indicate how certain frequencies of the vibration signals deviate from the input signal and therefore show their attenuation or amplification.

The indicator function combines these two transfer functions, such that the modal frequency of the horizontal vibration mode can be easily extracted. In particular, the indicator function emphasizes vibrations detected by the first sensing element and the second sensing element from the two transfer functions that are directed in the same oscillation/vibration direction. These vibration frequencies may, for example, be vibrations measured by the first and second sensing elements that are parallel to each other. Since the opposite sides/locations of the fluid container where the first sensing element and the second sensing element are mounted always vibrate in sync (corresponding to the horizontal vibration mode), this filtering by the indicator function emphasizes/amplifies the modal frequency of the horizontal vibration mode, such that it can be easily extracted from the measured data. The indicator function may be any function that takes the first transfer function and the second transfer function as inputs and extracts these parallel signal components or in general the in-sync components of the first transfer function and the second transfer function. For example, the indicator function may be based on a complex conjugate multiplication, as described further below. However, the indicator function may also be determined in any other suitable and conceivable way.

By obtaining the current modal frequency of the horizontal vibration mode from the indicator function and correlating it with reference data, the current filling level of the fluid container can be determined by the processing unit.

Although the processing unit is described as an independent unit, it should be appreciated that the processing unit may also be part of a superordinate system, such as a flight computer in a cockpit of an aircraft or other vehicle or in a remote location, such as a ground station. Further, the processing unit may comprise multiple independent units carrying out different steps of the overall procedure. Additionally, the processing unit or a superordinate system comprising the processing unit can include display components that output the current filling level in the sense of a fuel gauge after determining the current filling level of the fluid container, or the processing unit may output a corresponding filling level signal which may, for example, be passed to an onboard-computer (such as a flight computer) or other control and monitoring system. Any conceivable such combination is covered by the term "processing unit".

According to another embodiment, the processing unit is configured to determine the first transfer function and the second transfer function by the following steps: normalizing and transforming the vibration signal of the first sensing element, the vibration signal of the second sensing element, and the input signal to a frequency domain representation using Fast Fourier Transforms, FFTs; comparing the FFT of the vibration signal of the first sensing element with the FFT of the input signal to determine the first transfer function; and comparing the FFT of the vibration signal of the second sensing element with the FFT of the input signal to determine the second transfer function.

The general determination of the transfer functions (i.e., the comparing of the FFTs of the vibrations signals with the input signal, each in the frequency domain) after performing a spectral analysis has already been described further above and will not be repeated here. However, this embodiment explicitly uses fast Fourier transforms as spectral analysis procedure for transforming the corresponding time series data into the frequency domain. Each of the vibration signal of the first sensing element, the vibration signal of the second sensing element, and the input signal is transformed into the frequency domain using such FFT algorithms. The computation of FFTs itself is well known in the art and will not be described in detail herein. The corresponding FFTs (spectral functions) can then be used to determine the corresponding transfer functions, as described further above.

According to another embodiment, the processing unit is configured to determine the horizontal vibration mode by extracting parallel components of the first transfer function and the second transfer function via the indicator function.

Parallel components of the transfer functions refer to components of the transfer functions that correspond to parallel vibrations, as measured by the first and second sensing element, with regard to each other. In other words, since the first transfer function indicates the resonance behavior of frequencies measured by the first sensing element and since the second transfer function indicates the resonance behavior of frequencies measured by the second sensing element, components of the first transfer function and the second transfer function that are parallel to each other concern vibrations of the fluid container that are in sync at the location of the first sensing element and the second sensing element. These in-sync vibrations, in turn, correspond to the horizontal vibration mode. Therefore, extracting signal components of the first transfer function and the second transfer function, via the indicator function, that are parallel to each other enables to determine the horizontal vibration mode and its current modal frequency, as described further above. This, in turn, enables to determine the current filling level of the fluid container by comparing the current modal frequency of the horizontal vibration mode with reference data.

According to another embodiment, the indicator function is determined by computing the real part of a conjugate multiplication of the first transfer function and the second transfer function with each other in complex space to build the indicator function.

The vibration signals of the first sensing element and the second sensing element as well as the input signal are complex-valued functions. In general, the real part of a conjugate multiplication of two complex-valued numbers or functions results in the parallel projection of one of the complex numbers or functions onto the other one of the numbers or functions. Therefore, by computing the real part of the conjugate multiplication of the first transfer function and the second transfer function, or

$$I(f) = \mathrm{Re}(H_1(f) \cdot \mathrm{conj}(H_2(f))) = \mathrm{Re}(\mathrm{conj}(H_1(f)) \cdot H_2(f)),$$

where $I(f)$ is the indicator function, $H_1(f)$ is the first transfer function, $H_2(f)$ is the second transfer function, conj indicates complex conjugation, and Re indicates the real part, parallel vibration components measured by the first sensing element and the second sensing element can be easily extracted. As described above, from the resulting indicator function, the current modal frequency of the horizontal vibration mode (and with it the current filling level of the fluid container) can be easily determined. The horizontal vibration mode is the one exhibiting the highest resonance.

According to another embodiment, the processing unit is configured to determine the horizontal vibration mode from the indicator function by determining a frequency of a maximum peak of the indicator function.

Since the horizontal vibration mode is the vibration mode exhibiting the highest resonance and therefore the highest amplification with regard to the input signal, the horizontal vibration mode may be identified with the highest positive signal peak within the indicator function. The determination of this maximum peak's location can be done by standard data analysis procedures and can, for example, be further refined by additional signal processing techniques such as spline interpolation. This enables to determine the current modal frequency of the horizontal vibration mode. By comparing this current modal frequency with reference modal frequencies for the filling level, the current filling level of the fluid container can be determined.

According to another embodiment, the processing unit is configured to determine the current filling level of the fluid container by correlating the frequency of the determined horizontal vibration mode with reference horizontal mode frequencies corresponding to specific filling levels.

As already described further above, the horizontal vibration mode is highly sensitive and stable to the filling level of the fluid container and drifts in a predictable manner. Therefore, reference horizontal mode frequencies can be determined beforehand, for example in a laboratory environment or during a calibration procedure. In such a procedure, the fluid container may, for example, first be completely filled and then emptied in a controlled way while tracking the measured modal frequency of the horizontal vibration mode for different filling levels and keeping these modal frequencies as reference data. However, the reference data may also be determined in another suitable way, such as by computer modelling or machine learning and artificial intelligence methods.

Correlating the frequency of the determined horizontal vibration mode may then be done simply by comparing the determined current modal frequency with the reference data in order to determine the current filling level of the fluid container. However, correlating may also be done via machine learning and artificial intelligence algorithms.

According to another embodiment, the first sensing element and the second sensing element are configured to be mounted to opposing tips of the fluid container as the opposite sides of the fluid container. The at least one exciting element is configured to be co-located with at least one of the first sensing element and the second sensing element at the corresponding tip.

This configuration allows to precisely excite the horizontal vibration mode because the excitation direction into the fluid container and the sensing direction of the first and second sensing elements are the same and because the horizontal vibration mode is a vibration mode for which the two tips move/vibrate in sync. The fluid container may, for example, be a substantially cylindrical dewar tank having two tips at its end in the length direction of the dewar tank. It has to be appreciated that only one exciting element or multiple exciting elements may be provided. For example, only one exciting element may be co-located with either the first or the second sensing element at one of the tips of the fluid container or, e.g., a second exciting element may be co-located with the other one of the sensing elements at the opposite tip of the fluid container. Further, it is also conceivable to have multiple pairs of sensing elements together with corresponding exciting elements at suitable opposite sides of the fluid container, as long as each of the pairs of sensing elements allows to measure a corresponding horizontal vibration mode. This may allow to introduce redundancy to the system.

According to another embodiment, the filling level monitoring device further comprises a spatial orientation and acceleration sensor for measuring a pitch angle, a yaw angle, and a roll angle and for measuring an acceleration in each spatial orientation axis of the fluid container. The spatial orientation and acceleration are defined with regard to the pitch angle, the yaw angle and the roll angle and the acceleration with regard to each spatial orientation. The processing unit is further configured to consider the spatial orientation and/or the acceleration of the fluid container when correlating the frequency of the determined horizontal vibration mode with reference horizontal mode frequencies.

Although the horizontal vibration mode is substantially independent on the movement and acceleration of the fluid container, it may be conceivable that the movement and acceleration has at least a small influence on the filling level dependency of the modal frequency of the horizontal vibration mode. Therefore, considering the spatial orientation and acceleration of the fluid container may further improve accuracy of the determination of the filling level. Using data of a spatial orientation and acceleration sensor to improve accuracy may be particularly advantageous in aircraft applications, especially when such sensors are already present in the aircraft anyway.

The signal of the spatial orientation and acceleration sensor may be passed to the filling level monitoring device (i.e., to the processing unit) without the need to add additional sensors. However, the spatial orientation and acceleration sensor may be any position sensor suitable to determine the relative orientation of the fluid inside the fluid container with regard to the orientation of the fluid container. In addition, the filling level monitoring device may use acceleration data of such a spatial orientation and acceleration sensor or may use corresponding sensor data from a surrounding structure, such as an aircraft, in order to account for potential resonance frequency / modal frequency changes introduced by accelerations. When using such acceleration data together with the spatial orientation data, the sensor measures six degrees of freedom, namely the spatial position with regard to each of the spatial axis as well as the corresponding accelerations for each of the axis. In particular, by considering acceleration data, the superposition of gravity with dynamic forces (such as the forces introduced by the acceleration) may be considered when evaluating the filling level of the fluid container. Instead of one sensor for all degrees of freedom, individual sensor for each degree of freedom may be used.

The reference horizontal mode frequencies used for correlating the determined current modal frequency of the horizontal vibration mode to determine the current filling level may further include reference data for possible spatial orientations and accelerations. For example, the processing unit may have a stored lookup table of modal frequencies of the horizontal vibration mode for every possible spatial orientation of the fluid inside the container (or for a subset of interest of such possible positions) and for any possible acceleration that, in turn, each include reference modal frequencies for the possible filling levels.

However, the processing unit may also not use lookup tables but may rather calculate the corresponding reference horizontal mode frequencies (considering the desired parameters) by using a mathematical model of the structural dynamics of the container and correlating or matching the determined current modal frequency of the horizontal vibration mode with this modeled reference horizontal mode frequencies. For this, for example a machine learning algorithm may be utilized that takes into account the desired parameters, such as spatial orientations and accelerations, temperature and/or pressure, etc.

According to another embodiment, each of the first sensing element and the second sensing element is a device capable of measuring the dynamics with regard to vibrations of the container at the location of the sensing element.

Such a device capable of measuring the dynamics of the container may be any device capable of detecting or measuring properties of the container that correspond to the structural dynamics of the container, such as vibrations or other suitable mechanical properties.

The devices capable of measuring the dynamics of the container (i.e., the sensing elements) may, for example, be accelerometers. A further example for devices capable of measuring such properties may, for example, be composite fiber strain gauges. Such a composite fiber strain gauge may consist of rectangular piezo ceramic rods sandwiched between layers of adhesive, electrodes, and polyimide film. The electrodes are attached to the film in an interdigitated pattern which transfers the applied voltage to and from the ribbon-shaped piezo ceramic rods. This assembly enables in-plane poling, actuation, and sensing in a sealed and durable, ready-to-use package. The composite fiber strain gauge can also be applied (normally bonded) as a thin, surface-conformable sheet to various types of structures, or embedded in a composite structure. If voltage is applied, it works as an actuator and will bend or distort materials, counteract vibrations, or generate vibrations. If no voltage is applied it can work as a very sensitive strain gauge, sensing deformations, noise, and vibrations. Therefore, when the container vibrates or oscillates, the small deformations of the container are sensed by the composite fiber strain gauge. Since the vibration of the container comprises certain frequency components, the output signal of the composite fiber strain gauge follows the frequency pattern of the vibrations.

According to another embodiment, the at least one exciting element is configured to couple vibrational loads corresponding to the input signal from the signal source into the fluid container.

For this, the at least one exciting element may be any device capable of coupling vibrational loads or other mechanical loads into the container. As a non-limiting example, the exciting element may be a piezoelectric element. Such piezoelectric elements are well known in the art. When a voltage is applied to such elements, they deform according to the electrical signal (inverse piezoelectric effect). Therefore, if a non-constant signal is applied, the piezoelectric elements start to vibrate according to the frequency components of the input signal, thereby coupling corresponding vibrational loads into the container. Such piezoelectric elements may, for example, be of the same kind as the composite fiber strain gauge described above with regard to the sensing elements.

However, any other conceivable exciting element may be used.

According to a second aspect, a hydrogen tank is provided. The hydrogen tank comprises a fluid container for holding liquified hydrogen and a filling level monitoring device.

The filling level monitoring device may be embodied according to any one of the embodiments described above and is configured to monitor the filling level of the container of the hydrogen tank according to the principles described above.

According to a third aspect, an aircraft is provided. The aircraft comprises an aircraft fuselage, and a hydrogen tank.

Such an aircraft may use hydrogen as an alternative fuel, i.e., an aircraft turbine may be driven using hydrogen as an energy source. The hydrogen may be used as a primary energy source, e.g., by burning the hydrogen directly within the turbine, or as a secondary energy source, e.g., by producing electrical energy with a hydrogen fuel cell and powering the turbine by means of the electrical energy created in this way.

The filling level monitoring device according to the present disclosure enables accurate monitoring of the filling level of the hydrogen tank under any flight conditions. The fluid container of the hydrogen tank may, for example, be positioned within the fuselage such that a longitudinal axis of the container coincides with a longitudinal axis of the fuselage. However, the hydrogen tank may also be positioned within the fuselage in any other suitable way.

According to an embodiment, the filling level monitoring device is configured to monitor the hydrogen filling level of the fluid container.

In particular, the filling level monitoring device may constantly monitor the filling level during flight and report corresponding filling levels to the pilot.

According to another embodiment, a source of vibrations on board the aircraft suitable to excite the container in the desired frequency range is the signal source of the filling level monitoring device.

Such a source of vibrations may be any vibration source on board the aircraft. The vibrations of such a vibrations source may be coupled into the container in the desired way, in particular, such that the horizontal vibration mode is excited, and may function as an excitation source for the filling level monitoring device.

According to another embodiment, the source of vibrations on board the aircraft is the aircraft turbine.

During operation, an aircraft turbine creates certain frequency components, either in the form of vibrations or in the form of electromagnetic noise. These noise or vibration signals may cover a frequency range wide enough to cover the modal frequency range of the horizontal vibration mode of a fluid container of the hydrogen tank for different fuel levels, so that no additional signal source may be required. Instead, the vibrations of the turbine may be directly coupled into the container, or the electromagnetic noise may be captured, e.g., by means of antennas or other signal capture means and send to the at least one exciting element. In the first case, no additional exciting elements and no additional signal source may be required. In the latter case, only exciting elements but no additional signal source may be required. However, it should be noted that the aircraft turbine is only one example of a vibration source that may be employed for the filling level monitoring system and any vibration source within the aircraft may be used as an excitation source for determining the filling level of the container. Therefore, the vibration source is not limited to the aircraft turbine.

In summary, the present disclosure provides an accurate monitoring system to keep track of the filling level of a fluid container, such as a liquid hydrogen tank. Because of the changing flight conditions in an aircraft (and the cryogenic nature of LiH2), conventional filling level monitoring means, such as by measuring the fluid flow out of the tank or by determining the weight of the tank, are inherently inaccurate. These inaccuracies can be avoided by measuring the filling level of a fluid container by monitoring filling level dependent resonance frequencies of the tank, in particular by monitoring the modal frequency of the horizontal vibration mode, which is highly sensitive to the filling level, predictable, and highly insensitive to external influences. Therefore, the present disclosure enables a more accurate and non-intrusive monitoring of the filling level of fluid containers in general, and, in particular, in aircraft applications, thereby increasing security of aircrafts using alternative fuels such as hydrogen.

Although the present disclosure mainly is described with regard to aircraft applications, it should be noted that the disclosure may be used for any suitable application, such as for automotive and similar applications.

BRIEF DESCRIPTION OF THE DRAWINGS

In the following, exemplary embodiments are described in more detail having regard to the attached figures. The illustrations are schematic and not to scale. Identical reference signs refer to identical or similar elements. The figures show:

**Fig. 1**   a schematic overview of a hydrogen tank having a filling level monitoring device for a fluid container of the hydrogen tank.

**Fig. 2**   exemplary transfer functions for two sensing elements mounted at opposite sides of a fluid container, wherein the transfer functions are determined for one specific filling level of a fluid container.

**Fig. 3**   an exemplary indicator function using the transfer functions of Fig. 2.

**Fig. 4**   a comparison of two indicator functions obtained for two different filling levels of the fluid container of Fig. 1, namely in a completely empty and in a completely full state, illustrating the drifting modal frequency of the horizontal vibration mode depending on the filling levels.

**Fig. 5**     a schematic view of an aircraft comprising a hydrogen tank with a filling level monitoring device.

DETAILED DESCRIPTION

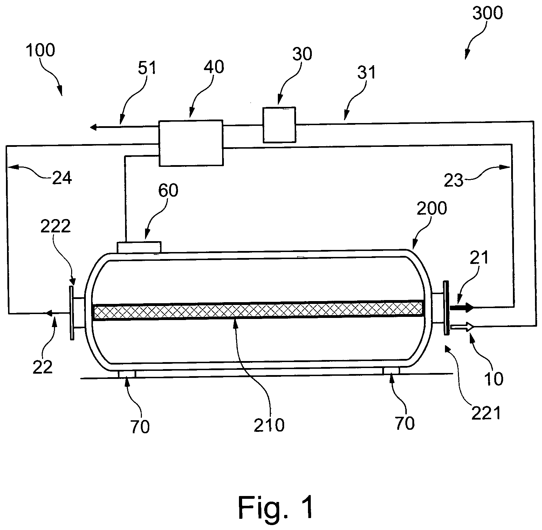

Fig. 1 schematically shows an exemplary liquid hydrogen tank 300. The hydrogen tank 300 comprises a fluid container 200 and a filling level monitoring device 100. The fluid container 200, in the depicted configuration, is embodied as a cylindrical dewar tank. Further, in the depicted configuration, the filling level monitoring device 100 comprises one exciting element 10, a first sensing element 21 and a second sensing element 22. Further, the filling level monitoring device 100 comprises a signal source 30, a processing unit 40, and an optional spatial orientation and acceleration sensor 60 and/or an optional temperature and/or pressure sensor 60 (both indicated by the same reference sign, which may also refer to a common sensor unit comprising all of these sensors). The exciting element 10 is electrically connected to the signal source 30. Further, the signal source 30 is electrically connected to the processing unit 40, the sensing elements 21, 22 are electrically connected to the processing unit 40, and the optional spatial orientation and acceleration sensor 60 (and/or the optional temperature and/or pressure sensor 60) is electrically connected to the processing unit 40.

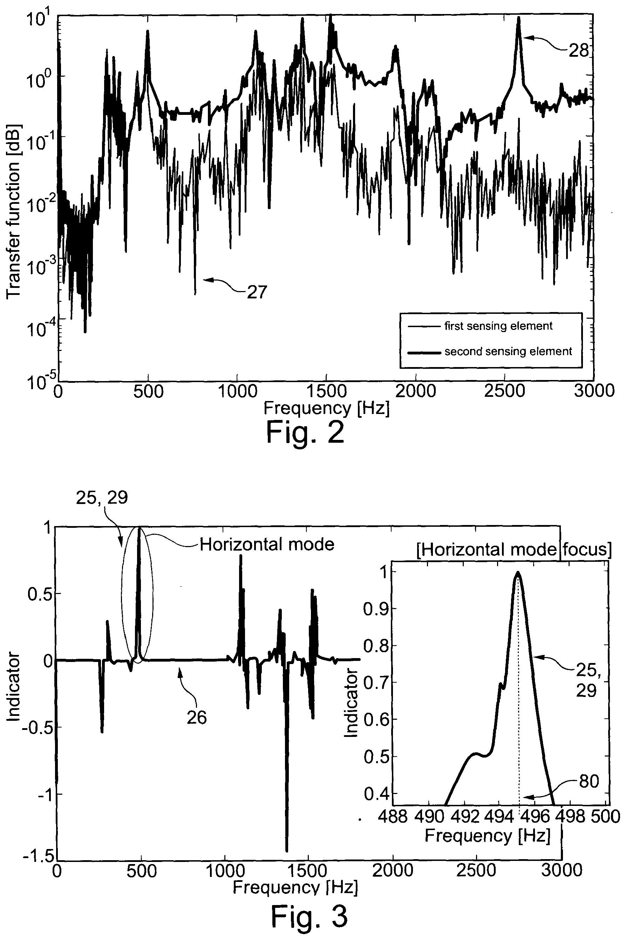

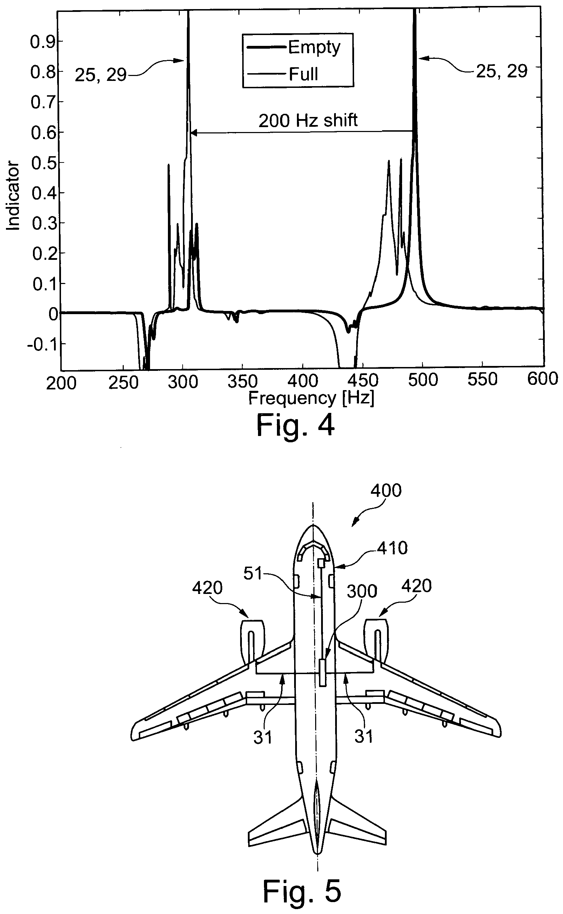

The fluid container 200 holds a liquid hydrogen filling which is schematically indicated by the filling level 210. The fluid container 200 is a pressure tight gas vessel configured to hold a pressurized liquified hydrogen gas. In the depicted configuration, the fluid container 200 is a cylindrical dewar tank 200 that comprises a first tip 221 (or first side 221) and a second tip (or second side 222). The first tip 221 and the second tip 222 are arranged opposite to each other and are distanced from each other in a length direction of the fluid container 200. The first sensing element 21 is co-located with the exciting element 10 at the first tip 221. The second sensing element 22 is located at the opposite second tip 222. When excited, the first tip 221 and the second tip 222 vibrate in sync with each other, which corresponds to the horizontal vibration mode 25 (not depicted in Fig. 1, see Figs. 3 and 4) as described and defined herein further above.

As described above, the signal source 30 may be any signal source generating electrical signals covering a multitude of frequency components. The frequency range of the signal source 30 in particular spans possible modal frequencies 80 (not depicted in Fig. 1, see Fig. 3) of the fluid container 200 at different filling levels 210. This frequency span may, for example, be determined by computer simulations of the structural dynamics of the container 200. It may also be determined beforehand in a laboratory environment, as will be readily apparent. Multiple possibilities have been described herein further above and will not be repeated here.

In the depicted configuration, the signal source 30 is a gaussian white noise signal source 30 generating a wide range of frequency components which are equally distributed.

The container 200 has various resonance frequencies, some of which are only correlated to the structural dynamics of the container 200 itself, while others are dependent on the filling level 210. In particular, some of the resonance frequencies are proportional to the filling level 210 of the tank and shift when the filling level 210 changes. It has been found that one vibration mode in particular, namely the horizontal vibration mode 25 (see Figs. 3 and 4) as defined herein further above, is highly sensitive tc the filling level 210 of the fuel container 200 and highly insensitive for external factors, making it ideal for monitoring the filling level 210 of the fluid container 200. The modal frequency 80 of the horizontal vibration mode 25 shifts, when the filling level 210 changes. Therefore, by determining the current modal frequency 80 (see Fig. 3) of the horizontal vibration mode 25 (see Figs. 3 and 4), the current filling level 210 of the container 200 may be accurately determined.

The gaussian white noise signal source 30 is configured to generate corresponding electrical signals or input signals 31 for the exciting element 10 (it should be appreciated that, although in the depicted configuration only one exciting element 10 is used, also multiple exciting elements 10 and/or multiple pairs of sensing elements 21, 22 may be used, as described herein further above). The exciting element 10 may be any element or device capable of generating mechanical oscillations or vibrations. In the depicted configuration, for example, the exciting element 10 is a piezoelectric element which is directly attached to the fluid container 200 and employs the inverse piezoelectric effect, thereby generating vibrations which correspond to the input signal 31 from the signal source 30 which are coupled into the fluid container 200. However, the exciting element(s) 10 may also be any other device capable of coupling mechanical vibrations into the container 200 and may, in particular, not necessarily be directly attached to the container 200. For example, the exciting elements may also be an acoustic wave source directed at the fluid container 200 at the desired location. However, these are only examples and in principle any other exciting element may be used.

Oscillations or vibrations from the exciting elements 10 corresponding to resonance frequencies of the fluid container 200 (in particular corresponding to the current modal frequency 80 of the horizontal vibration mode 25) for the current filling level 210 at the moment of the measurement are amplified within the fluid container 200 and create corresponding vibrations within the fluid container 200, while other frequency components are not amplified.

The sensing elements 20, in turn, are configured to pick up or measure these vibrations of the container 200 and generate corresponding vibration signals 23, 24 for the processing unit 40. In particular, because the first sensing element 21 and the second sensing element 22 are located opposite each other at the tips 221, 222 of the fluid container 200, the sensing elements 21, 22 both pick up vibrations corresponding to the horizontal vibration mode 25. The sensing elements 21, 22 may be any sensing elements 21, 22 capable of measuring oscillations or vibrations within the fluid container 200. In the illustrated exemplary embodiment, the sensing elements 21, 22 are composite fiber strain gauges consisting of an insulating flexible backing made from a composite fiber material which supports a metallic foil pattern. The gauge may be attached to the fluid container 200, e.g., using a suitable adhesive. When the fluid container 200 vibrates or oscillates, the small deformations of the container deform the metallic foil, thereby changing its electrical resistance. This change of resistance may, for example, be measured using a Wheatstone bridge. Since the vibration of the fluid container 200 comprises certain frequency components, the change of resistance of the fiber strain gauge follows the frequency pattern of the vibrations. However, other suitable sensing elements may be used, too. For example, the sensing elements 21, 22 may also be piezoelectric elements attached to the fluid container 200, such as the exciting elements 10, which generate electrical signals corresponding to the mechanical loads coupled into the piezoelectric element from the fluid container 200.

It should be noted that, although shown and described as having one exciting element 10 and two sensing elements 21, 22, any other number of exciting elements 10 and sensing elements 21, 22 (in particular of pairs of sensing elements 21, 22) may be employed, depending on the specific requirements, as long as the exciting elements 10 are arranged to excite the horizontal vibration mode and the pairs of sensing elements 21, 22 also measure the horizontal vibration mode 25.

The processing unit 40 may be any computing device for processing signals, such as a general-purpose computer having a CPU and memory components, a microcomputer, an FPGA, an ASIC, an TPU or any combination thereof or any other suitable computing device. The processing unit 40 receives the vibrations signals 23, 24 from the sensing elements 21, 22 as well as the input signal 31 from the signal source 30. By comparing the input signal 31 with the vibration signal(s) 23, 24, the processing unit 40 can determine transfer functions 27, 28 (see Fig. 2) for the sensing elements 21, 22 and can determine an indicator function 26 (see Figs. 3, 4) from which the horizontal vibration mode 25 and its current modal frequency 80 can be determined, which, in turn, can be used to determine the current filling level 210 of the fluid container 200. The filling level monitoring device 100 can then output a filling level signal 51 or can display the current filling level 210, if accordingly embodied (i.e., if having display components).

A concrete analysis algorithm for determining the horizontal vibration mode 25 and its modal frequency 80 and from this the current filling 210 will be described in the following with regard to Figs. 2 to 4 (with continued reference to Fig. 1).

Fig. 2 shows a first transfer function 27 for the first sensing element 21 and a second transfer function 28 for the second sensing element 22. The transfer functions 27, 28 shows the amplification or attenuation (y-axis) of frequency components (x-axis) within the input signal 31 of the signal source 30. In general, the first vibration signal 23 (of the first sensing element 21), the second vibration signal 24 (of the second sensing element 22) and the input signal 31 comprise time domain data. In order to determine the transfer functions 27, 28 shown in Fig. 2, these time domain data are first each transformed into the frequency domain by performing any suitable kind of spectral or modal analysis, for example by calculating fast Fourier transforms (FFTs) of the input signal 31 and the vibration signals 23, 24 to get corresponding frequency domain data. In order to compute the transfer functions 27, 28, the processing unit 40 may calculate a frequency response function (FRF) from the frequency domain data of the input signal 31 and the vibration signals 23, 24, for each of the first sensing element 21 and the second sensing element 22 individually. These frequency response functions then correspond to the transfer functions 27, 28 and are defined as

$$H_i(f) = \frac{V_i(f)}{E(f)}$$

where $H_i(f)$ is the frequency response function (or transfer function 27, 28) shown in Fig. 2, indication the amplification of the amplitude of certain frequency components over frequency $f$, $V_i(f)$ is the corresponding vibration signal 23, 24 over frequency, i.e., the FFT of the corresponding vibration signal 23, 24, and $E(f)$ is the input signal (or excitation signal) over frequency, i.e., the FFT of the input signal 31. The index $i = 1, 2$ represents the corresponding sensing element 22, 23 ($i = 1$ corresponds to the first sensing element 21; $i = 2$ corresponds to the second sensing element 22). Fig. 2 shows these transfer functions 27, 28.

Fig. 3 shows an indicator function 26, which is determined by the processing unit from the first transfer function 27 and the second transfer function 28 of Fig. 2. The vibration signal 23 of the first sensing element 21 and the vibration signal 24 of the second sensing element 22 as well as the input signal 31 are, in general, complex-valued functions. In general, the real part of a conjugate multiplication of two complex-valued numbers or functions results in the parallel projection of one of the complex numbers or functions onto the other one of the numbers or functions. Therefore, by computing the real part of the conjugate multiplication of the first transfer function 27 and the second transfer function 28, or

$$I(f) = \mathrm{Re}(H_1(f) \cdot \mathrm{conj}(H_2(f))) = \mathrm{Re}(\mathrm{conj}(H_1(f)) \cdot H_2(f)),$$

where, $I(f)$ is the indicator function 26, $H_1(f)$ is the first transfer function 27, $H_2(f)$ is the second transfer function 28, conj indicates complex conjugation, and Re indicates taking the real part, parallel vibration components measured by the first sensing element 21 and the second sensing element 22 can be easily extracted. From the resulting indicator function 26, the current modal frequency 80 of the horizontal vibration mode 25 (and with it the current filling level 210 of the fluid container 200) can be easily determined. The horizontal vibration mode 25 is the vibration mode, where the tips 221, 222 vibrate in sync at any time and which exhibits the highest resonance. Since the horizontal vibration mode 25 is the vibration mode exhibiting the highest resonance and therefore the highest amplification with regard to the input signal 31, the horizontal vibration mode 25 may be identified with the highest positive signal peak 29 within the indicator function 26. The determination of this maximum peak's 29 location can be done by standard data analysis procedures and can, for example, be further refined by additional signal processing techniques such as spline interpolation. This enables to determine the current modal frequency 80 of the horizontal vibration mode. By comparing this current modal frequency 80 with reference horizontal mode frequencies for the filling level 210, the current filling level 210 of the fluid container 200 can be determined. This may simply be done by correlating the determined current modal frequency 80 with corresponding reference horizontal mode frequencies or, for example, by machine learning algorithms, as described herein further above. The current filling level 210 of the fluid container 200 then corresponds to the filling level 210 associated with a modal frequency of the reference horizontal mode frequencies that matches the determined current modal frequency 80 (i.e., the frequency location of the maximum peak 29).

Instead of using stored reference data, the processing unit 40 may also calculate the corresponding reference data "on-the-fly" by using a computer model of the structural dynamics of the fluid container 200.

After having determined the current filling level 210 of the fluid container 200, the processing unit 40 outputs a filling level signal 51 which may, for example, be sent to a control system or display device. In aircraft applications, the filling level signal may be sent to a flight control computer or display device in the cockpit of the aircraft 400.

Fig. 4 shows exemplary the shift in the modal frequency of the horizontal vibration mode 25 between the completely empty and the completely full state of the fluid container 200. It can be clearly seen that the modal frequency 80 of the horizontal vibration mode shifts by about 200 Hz in the depicted example. These frequency shifts are highly predictable, highly sensitive for the filling level 210, and highly insensitive to external factors, making the horizontal vibration mode 25 very well suitable for determining the current filling level 210 of the fluid container 200 in-flight in a non-intrusive way.

Fig. 5 shows an aircraft 400 having a fuselage 410 and two turbines 420. The aircraft further comprises a liquid hydrogen tank 300, such as the one described above with regard to Fig. 1. The hydrogen tank 300 serves as a fuel source for the turbines 420. The turbines 420 may either directly burn the hydrogen from the hydrogen tank 300 as primary energy source or may, e.g., be an electric turbine using electrical energy created by means of a fuel cell which consumes hydrogen from the hydrogen tank 300.

Vibrations of the turbines 420 are directly coupled into the container 200 of the hydrogen tank 300 at the location of the exciting element 10 of Fig. 1. Therefore, the turbines 420 itself acts as exciting elements 10 for the container 200 and couples vibrations into the container 200.

Optionally, yaw, pitch and roll sensors of the aircraft 400 itself may be connected to the processing unit 40 and may act as the spatial orientation and acceleration sensor 60 of Fig. 1, which is, however, optional, since using the horizontal vibration mode 25 for monitoring the filling level 210 is at least largely independent on external influences. The tank is fixed in position within the fuselage 410. Because the turbine 420 itself acts as exciting element 10 for the filling level monitoring device 100 of the hydrogen tank 300, additional exciting elements 10 are not necessary in this configuration.

However, by including spatial orientation data of the fluid container 200 into the filling level monitoring device 100, it may be possible to even more accurately monitor the filling level 210 of a hydrogen tank 300 in aircraft applications, in particular under any flight conditions.

It should be noted that "comprising" or "including" does not exclude other elements or steps, and "one" or "a" does not exclude a plurality. It should further be noted that features or steps that have been described with reference to any of the above embodiments may also be used in combination with other features or steps of other embodiments described above. Reference signs in the claims are not to be regarded as limitation.

LIST OF REFERENCE SIGNS

10    exciting element
21    first sensing element

| 22 | second sensing element |
|---|---|
| 23 | vibration signal (from first sensing element) |
| 24 | vibration signal (from second sensing element) |
| 25 | horizontal vibration mode |
| 26 | indicator function |
| 27 | first transfer function |
| 28 | second transfer function |
| 29 | maximum peak |
| 30 | signal source |
| 31 | input signal |
| 40 | processing unit |
| 51 | filling level signal |
| 60 | spatial orientation and acceleration sensor, temperature and/or pressure sensor |
| 70 | mounts |
| 80 | modal frequency (of horizontal vibration mode) |
| 100 | filling level monitoring device |
| 200 | fluid container |
| 210 | filling level |
| 221 | first tip, first side |
| 222 | second tip, first side |
| 300 | liquid hydrogen tank |
| 400 | aircraft |
| 410 | aircraft fuselage |
| 420 | aircraft turbine |

**Claims**

1. Filling level monitoring device (100) for monitoring the filling level (210) of a fluid container (200), the filling level monitoring device (100) comprising:

   at least one exciting element (10);
   a first sensing element (21) and a second sensing element (22);
   a signal source (30); and
   a processing unit (40);
   wherein the at least one exciting element (10) is configured to be mounted to the fluid container (200);
   wherein the first sensing element (21) and the second sensing element (22) are configured to be mounted to the fluid container (200) at opposite sides (221, 222) of the fluid container (200);
   wherein the signal source (30) is connected to the at least one exciting element (10) and is configured to generate an input signal (31) comprising a multitude of frequency components;
   wherein the first sensing element (21) and the second sensing element (22) are each connected to the processing unit (40) and are configured to sense vibrations within the fluid container (200) and to generate and send corresponding vibration signals (23, 24) to the processing unit (40);
   wherein the processing unit (40) is configured:

      to determine a horizontal vibration mode (25) from the vibration signals (23, 24) of the first sensing element (21) and the second sensing element (22) and the input signal (31);
      to determine a modal frequency (80) of the determined horizontal vibration mode (25); and
      to determine a current filling level (210) of the fluid container (200) based on the modal frequency of the determined horizontal vibration mode (25).

2. The filling level monitoring device (100) of claim 1, wherein the processing unit (40) is configured to determine an indicator function (26) by:

   determining a first transfer function (27) in the frequency domain for the vibration signal (23) of the first sensing element (21) with regard to the input signal (31);

determining a second transfer function (28) in the frequency domain for the vibration signal (24) of the second sensing element (22) with regard to the input signal (31); and

combining the first transfer function (27) with the second transfer function (28) to determine the indicator function (26); and

wherein the processing unit (40) is configured to determine the horizontal vibration mode (25) from the indicator function (26).

3. The filling level monitoring device (100) of claim 2, wherein the processing unit (40) is configured to determine the first transfer function (27) and the second transfer function (28) by:

normalizing and transforming the vibration signal (23) of the first sensing element (21), the vibration signal (24) of the second sensing element (22), and the input signal (31) to a frequency domain representation using Fast Fourier Transforms, FFTs;

comparing the FFT of the vibration signal (23) of the first sensing element (21) with the FFT of the input signal (31) to determine the first transfer function (27); and

comparing the FFT of the vibration signal (24) of the second sensing element (22) with the FFT of the input signal (31) to determine the second transfer function (28).

4. The filling level monitoring device (100) of any one of claims 2 or 3, wherein the processing unit (40) is configured to determine the horizontal vibration mode (25) by extracting parallel components of the first transfer function (27) and the second transfer function (28) via the indicator function (26).

5. The filling level monitoring device (100) of any one of claims 2 to 4, wherein the indicator function (26) is determined by computing the real part of a conjugate multiplication of the first transfer function (27) and the second transfer function (28) with each other in complex space to build the indicator function (26).

6. The filling level monitoring device (100) of any one of claims 2 to 5, wherein the processing unit (40) is configured to determine the horizontal vibration mode (25) from the indicator function (26) by determining a frequency of a maximum peak (29) of the indicator function (26).

7. The filling level monitoring device (100) of any one of the preceding claims, wherein the processing unit (40) is configured to determine the current filling level (210) of the fluid container (200) by correlating the frequency of the determined horizontal vibration mode (25) with reference horizontal mode frequencies corresponding to specific filling levels (210).

8. The filling level monitoring device (100) of any one of the preceding claims, wherein the first sensing element (21) and the second sensing element (22) are configured to be mounted to opposite tips (221, 222) of the fluid container (200) as the opposite sides (221, 222) of the fluid container (200); and

wherein the at least one exciting element (10) is configured to be co-located with at least one of the first sensing element (21) and the second sensing element (22) at the corresponding tip (221, 222).

9. The filling level monitoring device (100) of any one of claims 7 or 8, further comprising a spatial orientation and acceleration sensor (60) for measuring a pitch angle, a yaw angle, and a roll angle and for measuring an acceleration in each spatial orientation axis of the fluid container (200);

wherein the spatial orientation and acceleration are defined with regard to the pitch angle, the yaw angle and the roll angle and the acceleration with regard to each spatial orientation; and

wherein the processing unit (40) is further configured to consider the spatial orientation and/or the acceleration of the fluid container (200) when correlating the frequency of the determined horizontal vibration mode (25) with reference horizontal mode frequencies.

10. The filling level monitoring device (100) of any one of the preceding claims, wherein each of the first sensing element (21) and the second sensing element (22) is a device capable of measuring the dynamics with regard to vibrations of the container (200) at the location of the sensing element (20).

11. The filling level monitoring device (100) of any one of the preceding claims, wherein the at least one exciting element (10) is configured to couple vibrational loads corresponding to the input signal (31) from the signal source (30) into the fluid container (200).

12. Hydrogen tank (300), comprising:

   a fluid container (200) for holding liquified hydrogen; and
   a filling level monitoring device (100) according to any one of the preceding claims

13. Aircraft (400), comprising:

   an aircraft fuselage (410); and
   a hydrogen tank (300) according to claim 12.

14. The aircraft (400) of claim 13, wherein the filling level monitoring device (100) is configured to monitor the hydrogen filling level (210) of the fluid container (200).

15. The aircraft (400) of claim 14, wherein a source of vibrations on board the aircraft suitable to excite the fluid container (200) in the desired frequency range is the signal source (30) of the filling level monitoring device (100).

Fig. 1

Fig. 2

Fig. 3

Fig. 4

Fig. 5

Europäisches Patentamt

European Patent Office

Office européen des brevets

## EUROPEAN SEARCH REPORT

**Application Number**

EP 24 29 0023

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/366720 A1 (MEYERHOFF THOMAS [DE] ET AL) 16 November 2023 (2023-11-16)<br>* figure 1 *<br>* claims 2-4,17 *<br>* paragraph [0014] *<br>* paragraph [0046] *<br>* paragraph [0065] - paragraph [0067] *<br>* paragraph [0069] *<br>* paragraph [0072] - paragraph [0074] *<br>----- | 1-15 | INV.<br>G01F23/296<br><br>ADD.<br>B64D37/30 |
| A | EP 4 310 464 A1 (SIMMONDS PRECISION PRODUCTS [US])<br>24 January 2024 (2024-01-24)<br>* figure 2 *<br>* paragraph [0022] - paragraph [0024] *<br>----- | 8 | |
| | | | **TECHNICAL FIELDS SEARCHED (IPC)**<br><br>B64D<br>G01F |

The present search report has been drawn up for all claims

| Place of search | Date of completion of the search | Examiner |
|---|---|---|
| The Hague | 20 November 2024 | Rambaud, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 29 0023

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2024

| Patent document cited in search report | Publication date | Patent family member(s) | | Publication date |
|---|---|---|---|---|
| US 2023366720 A1 | 16-11-2023 | US | 2023366720 A1 | 16-11-2023 |
| | | WO | 2023217807 A1 | 16-11-2023 |
| EP 4310464 A1 | 24-01-2024 | EP | 4310464 A1 | 24-01-2024 |
| | | US | 11828640 B1 | 28-11-2023 |

EPO FORM P0459

For more details about this annex : see Official Journal of the European Patent Office, No. 12/82

## REFERENCES CITED IN THE DESCRIPTION

**Patent documents cited in the description**

- WO 2023217807 A1